# EUROPEAN PATENT SPECIFICATION

(11) **EP 1 276 275 B1**
(45) Date of publication and mention of the grant of the patent: **05.09.2007**
(21) Application number: 01309100.4
(22) Date of filing: 26.10.2001
(51) Int. Cl.: H04L 12/24, H04L 29/12

(54) **Management method for network apparatus**
Verwaltungsverfahren für Netzwerkgeräte
Procédé de gestion d' appareils de réseau

(30) Priority: 12.07.2001 JP 2001211896
(43) Date of publication of application: 15.01.2003
(73) Proprietor: Allied Telesis K. K., Shinagawa-ku, Tokyo 141-8635 (JP)
(72) Inventor: Sato, Takayuki, c/o Allied Telesis Kabushiki K., Tokyo 141-8635 (JP)
(74) Representative: Faulkner, Thomas John

(56) References cited:
- US-A- 5 875 306
- STALLINGS W: "SNMP AND SNMPV2: THE INFRASTRUCTURE FOR NETWORK MANAGEMENT" IEEE COMMUNICATIONS MAGAZINE, IEEE SERVICE CENTER. PISCATAWAY, N.J, US, vol. 36, no. 3, March 1998 (1998-03), pages 37-43, XP000751844 ISSN: 0163-6804
- SIEGL M R ET AL: "Hierarchical network management: a concept and its prototype in SNMPv2" COMPUTER NETWORKS AND ISDN SYSTEMS, NORTH HOLLAND PUBLISHING. AMSTERDAM, NL, vol. 28, no. 4, February 1996 (1996-02), pages 441-452, XP004002977 ISSN: 0169-7552

## Description

This invention relates to management of a communications apparatus. This invention is suitably applicable for example to initial settings by a management device on a network apparatus such as a hub and a router connected to a network.

The widespread use of local area networks (LANs) and wide area networks (WANs) in recent years has allowed a great many personal computers (hereinafter referred to as PCs), hubs, switches, routers and other types of network apparatuses (among which an intelligent hub or the like may be called "agent") to get connected to networks and subnetworks thereof, where information is shared and transmitted in high traffic volume. Distributed environments in management of configuration, performance, security, and billing in the network would offer a difficulty in locating or isolating a possible problem with enormous cost entailed, and a drawback on risk management. Therefore, there has arisen a need for centralized management of network status conditions.

In order to perform network management, a management device (which may also be called "manager" or "server") monitors a connection status and traffic in network apparatuses, on the premise that the management device has grasped communication parameters and other information of the network apparatuses and has set management information on the network apparatuses. The communication parameters, which include IP address and the like, are used to enable communications capabilities of a network apparatus, and to make the network apparatus manageable to the manager. The management information is information required for the management device to manage the network apparatus, and includes information common to all the network apparatuses and information unique to the types of the network apparatuses. Such management methods are known from documents XP751844 and XP4002977. In the description of the present application, the initial setting of the management information may in some instances be called "initial configuration".

Among methods for setting communication parameters on the network apparatus have been conventionally proposed a manual setting using serial data communications. This is a method in which a terminal is connected with a target agent via an RS-232C interface to enter commands for directly setting communication parameters, but where tens of or hundreds of network apparatuses are connected to the network as in the recent network environments accompanied with the development of LAN and WAN, the load of configuration becomes too much. Accordingly, another method using communications protocols such as BOOTP (BOOTstrap Protocol), DHCP (Dynamic Host Configuration Protocol), TFTP (Trivial File Transfer Protocol) has been proposed in which a server (*e.g.*, DHCP server) automatically sets the communication parameters on clients online upon startup. The management device is in many instances provided independently of the DHCP server for the purpose of distributing the DHCP servers that set IP addresses and the like.

Conventionally, however, the initial setting of the network apparatus is not so easy. An initial configuration file might conceivably be transferred to the network apparatus through BOOTP, DHCP, and TFTP in combination, but each network apparatus could not be identified through these protocols. Therefore, in such an environment where different types of apparatuses coexist, management information unique to the network apparatus could not be set. On the other hand, a MAC address of each apparatus could be manually input in the management device, and the management information unique to the apparatus could be set based upon the MAC address. However, inputting the MAC addresses would be burdensome, and when the apparatus fails and is replaced, its MAC address is also changed; thus disadvantageously the MAC address needs inputting again.

Accordingly, it is an object of the present invention to provide a method and system for performing an initial setting on a network apparatus with relative ease.

According to the present invention there is provided a management method for managing a target device with a management device using management information;
the management device being connected to a network;
the target device being connected to a port of a first interconnecting device that is connected to the network; and
a second interconnecting device being connected to the network between the management device and the first interconnecting device and being set as a default device in the network,
characterized in that
the method comprises the management device updating the management information by obtaining, from the first interconnecting device, an address on the network of the target device that has been powered on, identifying information of the first interconnecting device, and a port identifier that identifies the port, the target device sending an initial setting request and the address of the target device to the second interconnecting device, the second interconnecting device forwarding the initial setting request and the address to the management device, the management device determining whether the address of the target device that has sent the initial setting request is included in the management information that has been updated, and the management device initially setting the target device that has sent the initial setting request.

Managing the target device based upon the address provided from the interconnecting device, allows the address to be automatically given from the interconnecting device to the management device, and thus facilitates the management including initial configuration.

The management device receiving a setting request for configuration information for managing the target device, and the address, and the management device identifying the address of the target device by comparing addresses provided by the first and second interconnecting devices allows the management device to set the configuration information at only the target device only upon a setting request. The setting request does not necessarily have to be generated by the management device. The target device notifying the management device of the setting request and the address via the second interconnecting device is useful because the target device in many instances has no information about the address of the management device before configuration.

The above address is, for example, an IP address and a MAC address.

For a better understanding of the invention, and to show how the same may be carried into effect, reference will now be made, by way of example, to the accompanying drawings, in which:-
Fig. 1 schematically illustrates a structure of a network system of the present invention.
Fig. 2 is a schematic block diagram of a management device of the network system as shown in Fig. 1.
Fig. 3 is a management table stored in a memory part of the management device as shown in Fig. 2.
Fig. 4 is a schematic block diagram of a interconnecting device with which the network apparatus is connected in the network system as shown in Fig. 1.
Fig. 5 is a schematic block diagram of the network apparatus in the network system as shown in Fig. 1.
Fig. 6 is a timing chart of an initial setting operation by the network system as shown in Fig. 1.
Fig. 7 is a flowchart for explaining a detailed operation of the management device as shown in Fig. 2 in the timing chart shown in Fig. 6.
Fig. 8 is a flowchart for explaining a control method implemented by the interconnecting device in the network system as shown in Fig. 1.
Fig. 9 is a flowchart for representing operations of the management device as shown in Fig. 2 creating the management table as shown in Fig. 3.
Fig. 10 is a variation of the timing chart shown in Fig. 6.
Fig. 11 is a flowchart for representing a backup method of information on the network apparatus implemented by the management device as shown in Fig. 2.
Fig. 12 is another variation of the timing chart shown in Fig. 6.
Fig. 13 is a timing chart for explaining a management operation of the network system as shown in Fig. 1.
Fig. 14 is a flowchart for representing states set in a "State" field of the management table as shown in Fig. 3.

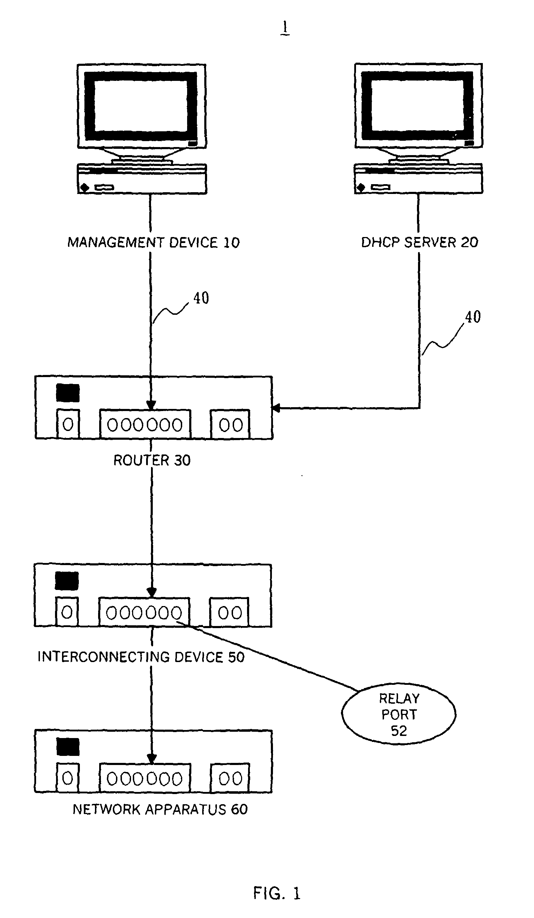

A description will now be given of a network system 1 of the present invention with reference to the accompanying drawings. Fig. 1 is a structural illustration of the network system 1 of the present invention. The network system 1 includes, as illustrated, a management device 10, a DHCP server 20, a interconnecting device 30, an Ethernet network 40, and a network apparatus 60.

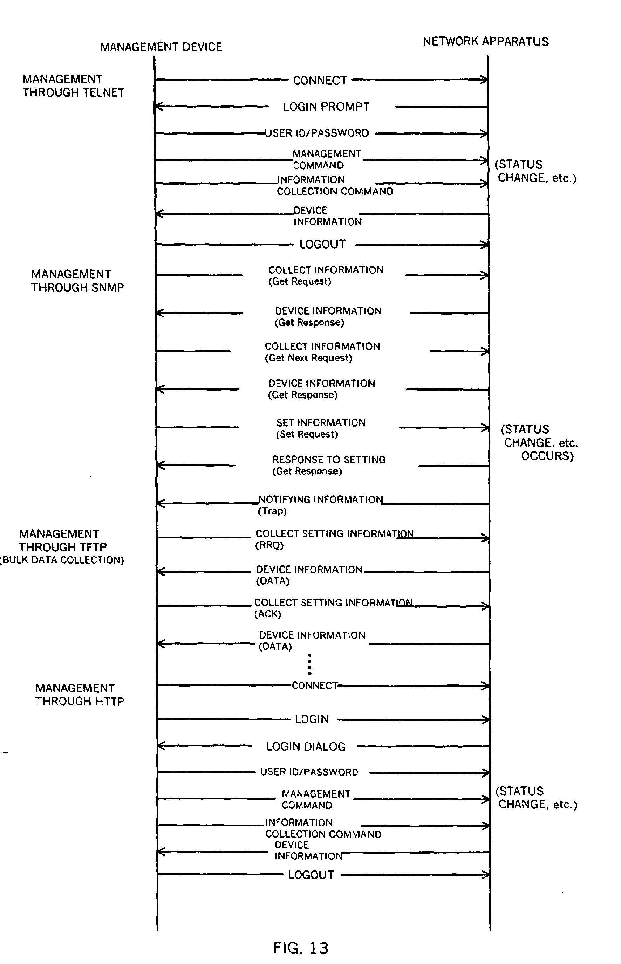

In conjunction with the present invention, the management device 10 manages the network apparatus 60. To be more specific, the management device 10 manages a status condition and traffic of connection established between the network apparatus 60 and the other apparatuses, and thereby manages configuration, performance, security, and billing of the Ethernet network 40. In the present embodiment, as will be described later with reference to Fig. 13, the management device 10 manages the network apparatus 60 using SNMP.

In the configuration management, the status conditions of devices constituting the network are monitored, and an operation of each apparatus is controlled. In addition, a firmware version may be acquired for each apparatus. This allows a network administrator to grasp the current network configuration (hereinafter referred to as "network configuration") connected to the network and subnetworks thereof.

In the performance management, an administrator measures the performance of the devices constituting the network. The performance management allows the network administrator to monitor the status conditions of traffic of each apparatus to see the network activities as to whether an abnormal packet is transmitted, whether there is a shortcoming in performance of the server, or the like.

In the security management, the use of resources (information and apparatuses) in the network is restricted and controlled to encourage a valid use of these resources. The network administrator periodically investigates an access record of users to find an unauthorized use, or to prevent an unauthorized user from invading the network.

In the billing management, the use statuses of the resources in the network are recorded for each user. The network administrator grasps the use rates of the network resources for each user to issue a warning to a user who abuses the resources or to use such information for providing better services.

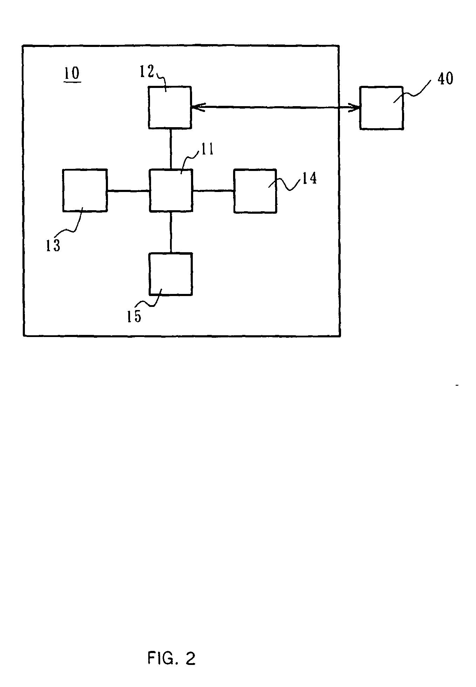

The management device 10 in the present embodiment, which is constructed exemplarily as a desktop PC, includes, as shown in Fig. 2, a controller 11, a communication port 12, a RAM 13, a ROM 14, and a memory part 15. Fig. 2 is a schematic block diagram of the management device 10. In Fig. 2, input/output devices (*e.g.*, a keyboard, a mouse or other pointing devices) and a display devices (*e.g.*, a display monitor, and the like) attached to the management device 10 are not illustrated. Through the input device, an operator of the management device 10 may input data of various kinds in the memory part 15, and download necessary software into the RAM 13, and ROM 14 or memory part 15.

The controller 11, which covers a broad range of processors such as a CPU and an MPU regardless of what we may call that, controls each section of the management device 10. If necessary, the management device 10 may be connected with a host (not shown), and the controller 11 may communicate with the host. The controller 11, in conjunction with the present invention, executes a configuration management table creation program stored in the memory part 15 to set configuration information of the network apparatus 60 and constructs management tables 16 and 17. Moreover, the controller 11 manages the network apparatus 60 via the communication port 12.

The communication port 12 may be a LAN adapter for establishing a connection to the Ethernet network 40, and a USB port or IEEE 1394 port for providing connection to the Internet (as necessary, via an Internet service provider (ISP)) via a modem, or a terminal adapter (TA) through the public telephone network, ISDN, or various types of dedicated lines. The RAM 13 serves to temporarily store data to be read from the ROM 14 or the memory part 15 or data to be written in the memory part 15 or the like. The ROM 14 serves to store various kinds of software required to have the controller 11 operated, firmware, and other types of software.

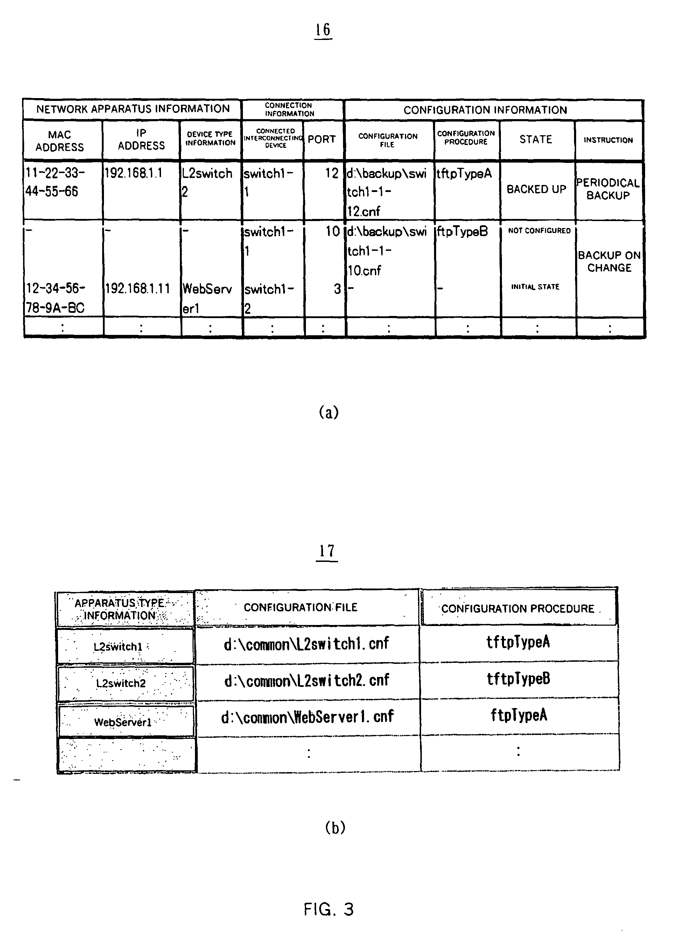

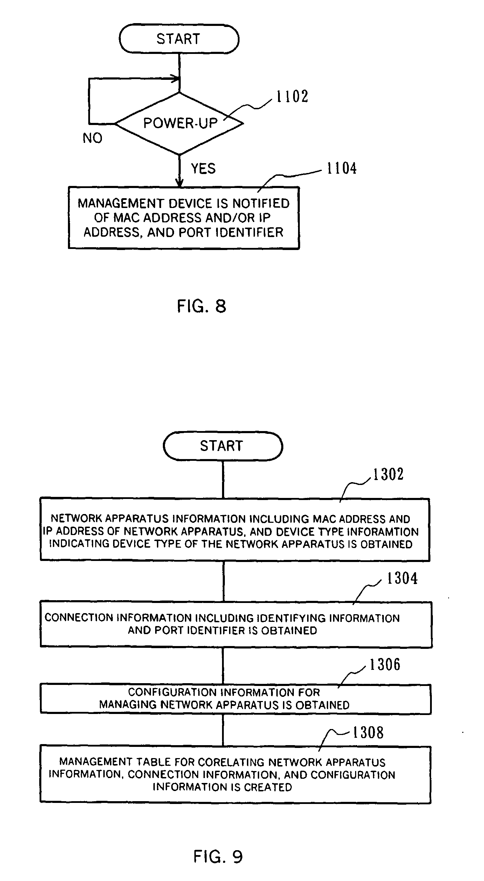

The memory part 15 serves to store a management table creation program for creating the management table 16 as shown in Fig. 3(a) and the management table 17 as shown in Fig. 3(b), and the management table 16 as shown in Fig. 9. Figs. 3(a) and (b) shows an example of the management tables 16 and 17. The management table creation program may be distributed as an independent commodity. Accordingly, the program may be sold in a CD-ROM or other recordable media, or distributed and updated online via a network such as the Internet.

The management table 16 serves to instruct and manage the network apparatus 60 (or configuration information thereon) connected to a network, or a subnetwork as a segment of the network via the interconnecting devices 30 and 50. This management table 16 allows an inventory management of a plurality of network apparatuses 60 to be performed at one place. In the table, '-' denotes that no data have been obtained or set yet. The management table 16 represents a relationship among network apparatus information, connection information, and configuration information. The management table 16 differs from the management table 17 in that the configuration information varying with the types of the network apparatuses 60 is identified.

The network apparatus information consists of an IP address and MAC address of the network apparatus 60 on the network, and the device type information for identifying the type of the network apparatus 60.

The IP (Internet Protocol) address is an address that is assigned to computers or network apparatuses connected to a network supporting TCP/IP, and is represented as a series of numbers in decimal notation separated by periods, each number ranging from 0 to 255. The IP address is included in an IP header provided by the IP protocol arranged in the network layer of the TCP/IP protocol. An IP address of a computer directly connected to the Internet may be obtained from the NIC (Network Information Center). Alternatively, a domain name corresponding to the IP address that is assigned by the DNS (Domain Name System) may be used in place of an IP address.

The MAC (Media Access Control) address is an address for identifying an information apparatus connected to a LAN, and a hardware address of a interconnecting device located in a communications path for reaching an IP address.

The device type information is, for example, sysObjectID object type in MIB-II for SNMP that will be described later. The device type information may also be a housing identifier of the network apparatus 60.

The connection information consists of identifying information of the interconnecting device 50 connected with the network apparatus 60, and a port identifier that will be described later. The identifying information of the interconnecting device 50 may be the IP address.

The configuration information consists of a configuration file, configuration procedure, state, and instruction for managing the network apparatus 60.

The configuration file serves to store management information the management device 10 sets on the network apparatus 60. The configuration procedure is an identifier for managing a procedure in which the management device 10 sets information on the network apparatus 60. The procedure means a protocol, authentication process, or the like. An administrator of the management device 10 may freely select the configuration procedure. A plurality of configuration files may be designated as the configuration file (*i.e.*, in the management tables 16 and 17). The configuration file may be firmware (*i.e.*, software implemented in the network apparatus 60).

However, in practical application, the configuration file and the configuration procedure may be, in many instances, copied from another area of the memory part 15 in which software used commonly among the types of the network apparatuses 60 and unique software varying with the types, copied from a CD-ROM including a plurality of configuration files for managing the network apparatuses 60, or downloaded from a specific homepage via the Internet.

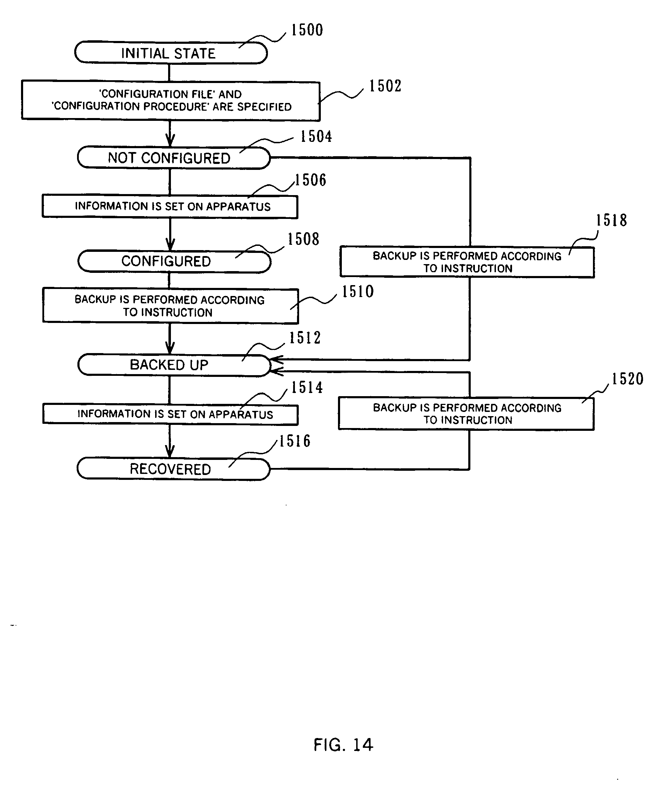

The "State" field serves to determine whether the configuration file is backed up, and enables an administrator of the management device 10 to grasp the status of the configuration/backup. One of five states may be set in the "State" field, and a transition is made as shown in Fig. 14. Fig. 14 is a flowchart for representing the states set in the "State" field.

An 'Initial state' (step 1500) is a state in which neither configuration file or configuration procedure is specified, *i.e.*, set in the management table 16. Thus, the controller 11 sets the configuration file and configuration procedure in the management table 16 (step 1502). Even in either of these states, when the configuration file and configuration procedure are specified, a transition is made to a 'Not configured' state (step 1504). Also in either of these states, when the configuration file and configuration procedure are removed, a transition is made to the 'Initial state'.

The 'Not configured' state (step 1504) is a state where the configuration file and configuration procedure are set in the management table 16 but have not yet been set on the network apparatus 60. In that state, the controller 11 sets the configuration file and configuration procedure on the network apparatus 60 (step 1506). When the configuration file and configuration procedure are set on the network apparatus 60, the "State" field of the management table 16 is changed to a 'Configured' state (step 1508). Like this, the 'Configured' state is a state in which the configuration file and configuration procedure are set on the network apparatus 60.

Next, according to an instruction in an "instruction" field of the management table 16 that will be described later, configuration information (or management table 16) is backed up (step 1510). When the configuration information is backed up, a 'Backed up' state is set in the "State" field (step 1512). The 'backed up' state is a state in which the management table 16 is backed up in accordance with an instruction in the "Instruction" field.

Next, information including the configuration file and configuration procedure that are backed up is set on the network apparatus 60 (step 1514). This sets a 'Recovered' state in the "State" field (step 1516). This 'Recovered' state is a state in which the network apparatus 60 is configured with configuration information that is backed up.

In some instances, backup may be performed in accordance with an instruction of the "Instruction" field from step 1504 to step 1512 (step 1518). Or, backup may also be performed in accordance with an instruction of the "Instruction" field from step 1516 to step 1512 (step 1520). For example, when the management table 16 is backed up in the 'Not configured' state, the state is changed into the 'Backed up' state, and thereafter when the information is set on the network apparatus 60, the state in the "State" field is changed to the 'Recovered' state rather than the 'Configured' state.

The "Instruction" field indicates a backup method for configuration information of the network apparatus 60. For example, a 'Periodical backup' means that the configuration file is periodically backed up at a specified time, while a 'Backup on change' means that the configuration file is backed up when the administrator changes the device settings.

The management device 10 may further have a subnet mask, a default gateway, a user ID and password, a hardware version, and firmware version included in the management table 16. The hardware version is a version of the network apparatus 60 hardware, and the firmware is a version of the network apparatus 60 firmware.

The management table 17 as shown in Fig. 3(b) is a management table common for each type of the network apparatus 60. The management table 17 is looked up when the configuration file is not set in the management table 16. In the management table 17, as shown, device type information of the network apparatus 60, a configuration file common for each type of the apparatus, and a configuration procedure common for each type of the apparatus are correlated with each other. The management table 17, according to the present embodiment, is created before the management table 16 is created, and stored in the memory part 15 in advance. It goes without saying that the management table 17 may be downloaded from resources on the Internet or copied from a CD-ROM when used.

The DHCP server 20 sets communication parameters on the network apparatus 60. Such separate provision of the DHCP server 20 independent from the management device 10 is preferable to achieve distributed services of the DHCP server. The communication parameters include the above-mentioned IP address, subnet mask, default gateway.

The subnet mask is a bit pattern for separating the host address part of the IP address into the subnet address and the host address. When "255.255.255.0" is set in the subnet mask, the first three numbers are represented in binary notation as "11111111". "1" in the subnet mask denotes the same network.

The default gateway is an IP gateway through which a host transmits an IP datagram when the host for transmitting the IP datagram incorporates a routing table including a target IP address, unless the target IP address has the same network address as the host.

The user ID and password pair is an identifier for preventing unauthorized use of the network apparatus 60 in the network. The management device 10 may store information that was acquired in advance by offline means such as telephone, facsimile, and ordinary mail from the user of each network apparatus 60 on the network apparatus 60, or may acquire the information when the configuration information is set at the network apparatus 60.

The communication parameters may include cryptographic information (*e.g.*, key information and encryption scheme information), and an address of the management device 10 for transmitting a notification that the network apparatus 60 is abnormal (*e.g.*, a trap signal for use with SNMP as will be described later).

If the controller 11 could display a tree of a network structure of the Ethernet network 30 from information in the management table 16, it would preferably facilitate user's understanding.

The interconnecting device 30 is embodied as a router in the present embodiment. The router is a interconnecting device for establishing connection between LANs or between LAN and WAN, and since any mechanism known in the art may be applied to the interconnecting device 30, a detailed description will be omitted herein. However, the router 30, as will be described later, serves to forward an initial setting request transmitted from the network apparatus 60 to the router 30 to the management device 10. The router 30 is connected with the management device 10 and the DHCP server 20 via the Ethernet network 40. The interconnecting device 30 may include a wireless interconnecting device (*e.g.*, an access point as a interconnecting device for wireless LAN).

The present embodiment uses the Ethernet network 40 as a typical LAN. The Ethernet network 40 is a LAN in a bus topology, and includes 10Base-T, 100Base-TX, Gigabit Ethernet, and the like. However, the present invention is not only applicable to the above, but also to other types of LAN (*e.g.*, Token Ring), and networks other than LAN such as WAN (Wide Area Network), MAN (Metropolitan Area Network), private network, the Internet, commercial dedicated lines network (*e.g.*, America Online), and other networks.

The interconnecting device 50 is a interconnecting device for connecting the network apparatus 60 to the network 40, and includes a relay port 52 through which the network apparatus 60 is connected. The interconnecting device 50 is comprised, for example, of a hub, a switch, a router, other concentrators, a repeater, a bridge, a gateway device, a PC, a wireless interconnecting device (*e.g.*, an access point as a interconnecting device for wireless LAN), or the like. Identifying information of the interconnecting device 50 and a port identifier of the relay port 52 are indicated in the connection information in the management table 16.

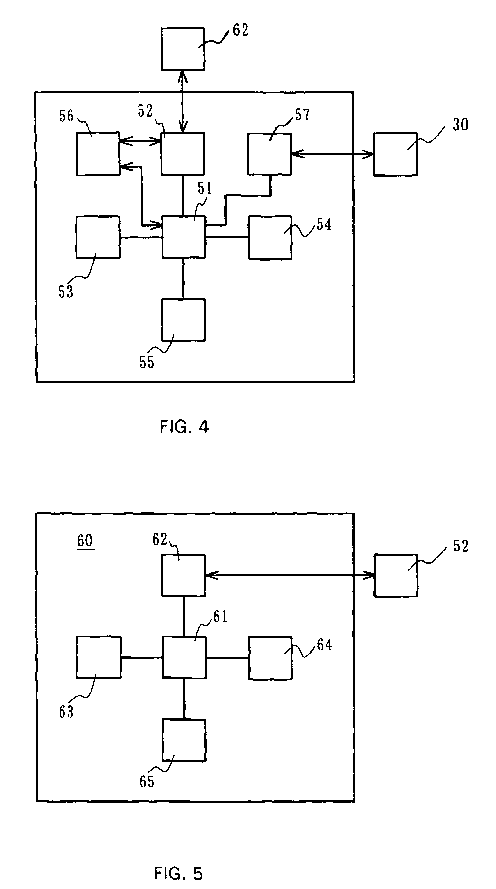

The interconnecting device 50 includes, as shown in Fig. 4, a controller 51, a relay port 52, a RAM 53, a ROM 54, a memory part 65, a detector part 56, and a communication port 57. Fig. 4 is a schematic block diagram of the interconnecting device 50. In Fig. 4 as well, the input and output devices and display device attached to the interconnecting device 50 are not illustrated for the sake of convenience. Through the input/output device, an operator of the interconnecting device 50 may input data of various kinds in the memory part 55, and download necessary software into the RAM 53, and ROM 54 or memory part 55.

The controller 51, which covers a broad range of processors such as a CPU, and MPU regardless of what we may call that, controls each section of the interconnecting device 50. The controller 51, communicates with the detector part 56, and provides information for identifying the network apparatus 60 to the management device 10, or relays management of the network apparatus 60 by the management device 10.

The relay port 52 is a communication port through which the network apparatus 60 establishes a cable connection.

The RAM 53 serves to temporarily store data to be read from the ROM 54 or the memory part 55, or data to be written in the memory part 55, or the like. The ROM 54 serves to store various kinds of software required to have the controller 51 operated, firmware, and other types of software.

The memory part 55, serves to store a control method executed by the interconnecting device 50 as will be described later with reference to Fig. 8. This control method may be implemented as a program that can be distributed as an independent commodity. Accordingly, the program may be sold in a CD-ROM or other recordable media, or distributed and updated online via a network such as the Internet.

The detector part 56 detects power-up of the network apparatus 60 by communicating with the relay port 52, and notifies the controller 51 of the power-up. Since the detector part 56 may perform detection by comparing a voltage of the relay port 52 with a specific slice level, or any structure known in the art may be applied to the detector part 56, a detailed description will be omitted herein.

The communication port 57 may be a LAN adapter for connecting the interconnecting device 50 with the interconnecting device 30 or the Ethernet network 40, and a USB port or IEEE 1394 port for providing connection to the Internet (as necessary, via an Internet service provider (ISP)) via a modem, or a terminal adapter (TA) through the public telephone network, ISDN, or various types of dedicated lines. Through the communication port 57 the interconnecting device 50 may communicate with the management device 10.

The network apparatus 60 is a target device to be managed by the management device 10, and includes network apparatuses such as a hub, a switch, a router, other concentrators, a repeater, a bridge, a gateway device, a PC, a server, and a wireless interconnecting device (*e*.*g*., an access point as a interconnecting device for wireless LAN).

The network apparatus 60, as shown in Fig. 5, includes a controller 61, a communication port 62, a RAM 63, a ROM 64, and a memory part 65. Fig. 5 is a schematic block diagram of the network apparatus 60. In Fig. 5 as well, the input and output devices and display device attached to the network apparatus 60 are not illustrated for the sake of convenience. Through the input/output device, an operator of the network apparatus 60 may input data of various kinds in the memory part 65, and download necessary software into the RAM 63, and ROM 64 or memory part 65.

The controller 61, which covers a broad range of processors such as a CPU and an MPU, regardless of what we may call that, controls each section of the network apparatus 60. The controller 61, requests the DHCP server 20 to transmit communication parameters and stores the received communication parameters in the memory part 65, transmits an initial setting request to the router 30, and communicates with the controller 11 of the management device 10.

The communication port 62 is an interface of various kinds or the like that is connected with the relay port 52 of the interconnecting device 50. The RAM 63 serves to temporarily store data to be read from the ROM 64 or the memory part 65 or data to be written in the memory part 65 or the like. The ROM 64 serves to store various kinds of software required to have the controller 61 operated, firmware, and other types of software. The memory part 65 serves to store communication parameters and a setting program thereof. The setting program is a program that receives and sets communication parameters from the DHCP server.

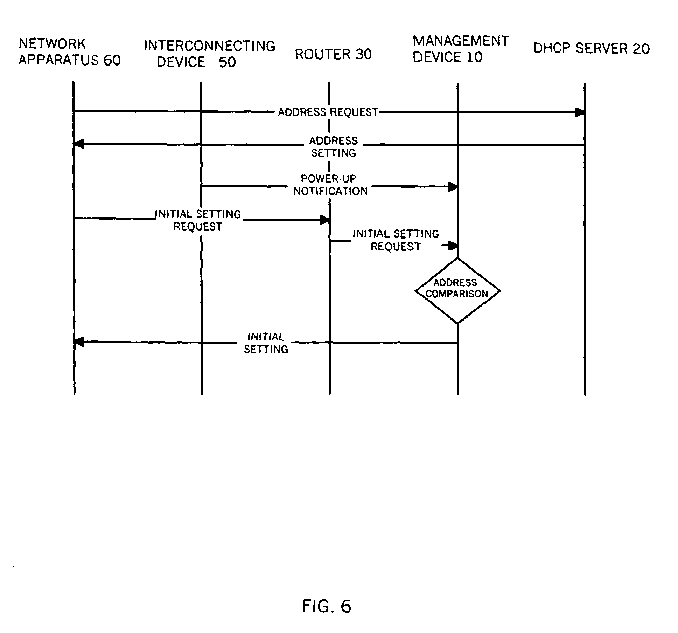

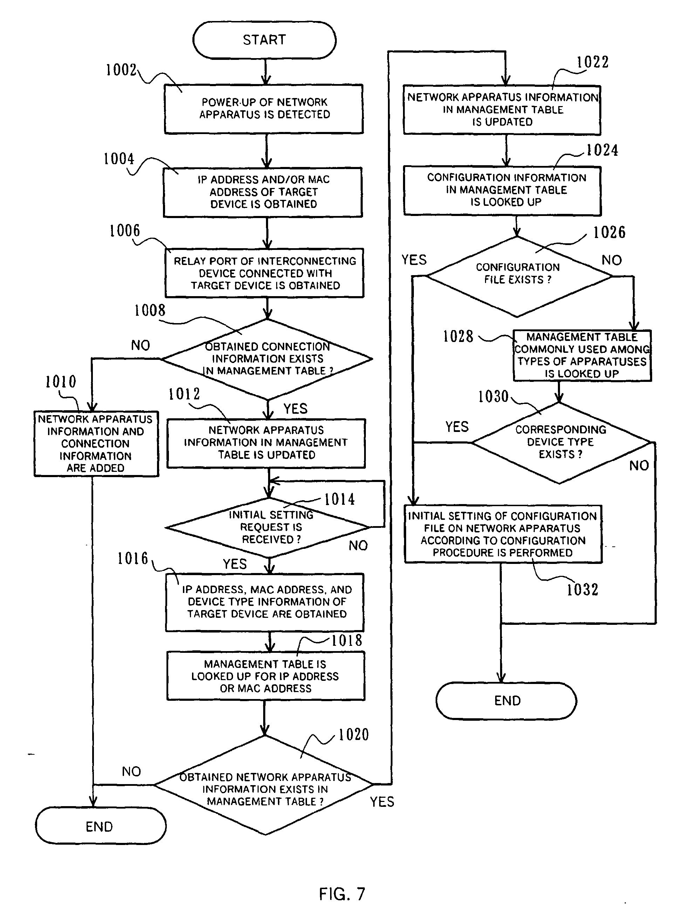

A description will be given of an operation of the inventive network system 1 with reference to Figs. 6 and 7. Fig. 6 is a timing chart of an initial setting operation of the network apparatus 60 by the network system 1. Fig. 7 is a flowchart for explaining a detailed operation of the management device 10 in the timing chart shown in Fig. 6.

As indicated by two topmost arrows in Fig. 6, first, the network apparatus 60 requests the DHCP server 20 to transmit communication parameters with DHCP, for example, upon power-up, and the DHCP server 20, in response thereto, transmits and sets the communication parameters. The present invention is not limited to the above, but the network apparatus 60 may use BOOTP or other protocols.

Concurrently, the detector part 56 of the interconnecting device 50 communicates with the relay port 52, and thereby detects the power-up of the network apparatus 60, and notifies the controller 51 of the detection. An operation of the interconnecting device 50 in this case is shown in Fig. 8. Fig. 8 is a flowchart for explaining a control method implemented by the interconnecting device 50.

First, the controller 51 determines using a detection result of the detector part 56 whether the network apparatus 60 connected with the interconnecting device 50 is powered on (step 1102). Next, the controller 51 receives a notification of the power-up from the detector part 56, and if the controller 51 determines that the target device to be managed is powered on, the controller 51 notifies the management device 10 through the communication port 57 of the MAC address and/or IP address, and the port identifier of the relay port 52 (step 1104).

Accordingly, as indicated by the third arrow from the top in Fig. 6, the controller 51 of the interconnecting device 50 notifies the management device 10 through the communication port 57 of the power-up. When the management device 10 detects the power-up of the network apparatus 60 (step 1002), the management device 10 obtains the MAC address or IP address of the network apparatus 60 (step 1004), and obtains identifying information of the interconnecting device 50 with which the network apparatus 60 is connected, and the port identifier of the relay port 52 (step 1006).

Next, the controller 11 of the management device 10 conducts a search and determines whether the obtained connection information exists in the management table 16 (step 1008). The controller 11, if determining that the connection information does not exist, add network apparatus information and connection information to the management table 16 (step 1010), and completes the process. On the other hand, the controller 11, if determining that the connection information does exist, updates (the history of) the network apparatus information in the management table 16 (step 1012).

When the setting of the communication parameters is concluded, the network apparatus 60 transmits the initial setting request to a predetermined default router 30, for example, with a trap message in SNMP that will be described later. In response, the router 30 forwards the setting request from the network apparatus 60 to the management device 10. In this manner, the network apparatus 60 transmits the initial setting request to the management device 10 through the router 30 in the present embodiment. This is because the network apparatus 60 generally does not have information on an address of he management device 10 when the communication parameters are set. However, if the DHCP server 20 transmits the address of the management device 10 together with the communication parameters to the network apparatus 60, the network apparatus 60 may directly transmit the initial setting request to the management device 10.

The network apparatus 60 may have device type information, and the above user ID, hardware version or the like, included in parameters for the initial setting request. This allows the management device 10 to perform an initial configutation procedure according to the device type, and to perform finer management in the management that will be described later with reference to Fig. 13.

The controller 11 of the management device 10, if determining that the initial setting request is received (step 1014), obtains the IP address, MAC address, and device type information of the network apparatus 60 (step 1016). Next, the management device 10 compares the MAC address or IP address obtained from the interconnecting device 50 upon power-up with the MAC address or IP address obtained upon receipt of the initial setting request, and searches for an address that matches (step 1018). The controller 11, if determining that the obtained network apparatus information does not exist in the management table 16, stops the process (step 1020). In that event, an error message or the like may be returned to the network apparatus 60.

On the other hand, the controller 11 of the management device 10, if determining that the obtained network apparatus information exists in the management table 16, updates (the history of) the network apparatus information (step 1022). Next, the controller 11 looks up the configuration information in the management table 16 (step 1024). Next, the controller 11 determines whether the configuration file exists in the management table 16 (step 1025).

The controller 11, if determining that the configuration file does not exist in the management table 16 (step 1026), looks up the management table 17 (step 1028). Next, the controller 11 determines whether a corresponding device type exists in the management table 17 (step 1030). The controller 11, if determining that the corresponding device type does not exist in the management table 17 (step 1030), the process is concluded. On the other hand, the controller 11, if determining in step 1026 that the configuration file exists in the management table 16 and determining in step 1030 that the corresponding device type exists in the management table 17, performs an initial setting of the configuration file on the network apparatus 60 in accordance with the configuration procedures of the management table 16 or 17 (step 1032), and completes the process. The controller 11 performs an initial setting of the configuration file in the management table 17 on the network apparatus 60, and thereby the management device 10 can perform minimum management of the network apparatus.

As described above, the management device 10 in the present embodiment performs an initial setting of the network apparatus 60 based upon the address and optionally the port identifier of the network apparatus 60. To be more specific, on the network apparatus 60 identified by the address and optionally the port identifier, in accordance with a predetermined configuration procedure, the initial setting is performed.

The controller 11 preferably inquires a user in each step as described above whether the network configuration should be displayed in a treelike chart, and displays the tree if the user wishes so.

Referring now to Fig. 9, a description will be given of a creation method for the management table 16 by the management device 10. First, the controller 11 obtains the network apparatus information including the MAC address and IP address of the network apparatus 60, and the device type information that indicates the type of the network apparatus (step 1302). The obtaining method may be linked with the power-up detection by the interconnecting device 50, or may be obtained from the DHCP server 20 as will be described later.

Next, the controller 11 obtains connection information including the identifying information and port identifier (step 1304).

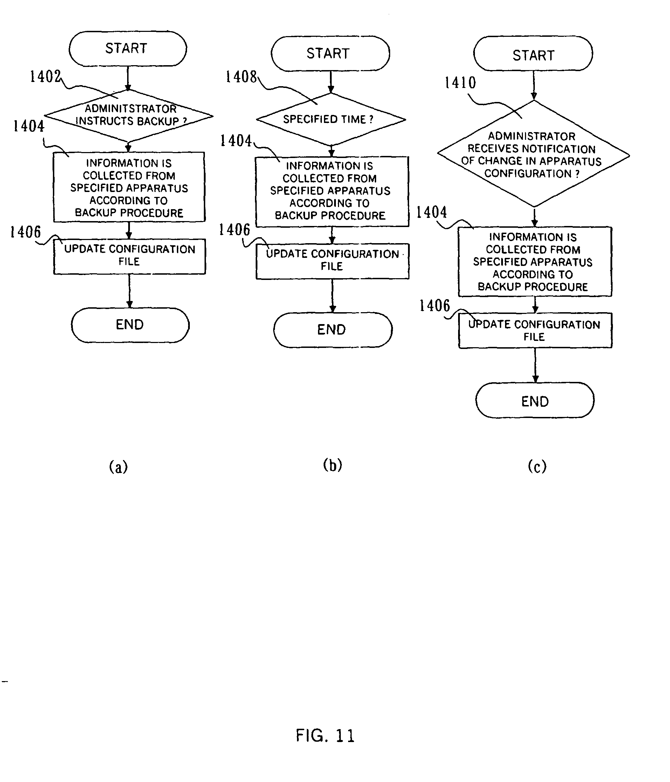

Next, the controller 11 obtains configuration information for managing the network apparatus, *i.e.*, a configuration file, a configuration procedure, and a state and instruction (step 1306). As described above, the configuration file and configuration procedure may be copied from those which have been combined and stored in another area of the memory part 15 in advance. The state and instruction fields may be entered by an administrator of the management device 10 when the corresponding network apparatus information or the like is combined. A method of updating the configuration file in accordance with an instruction entered in the instruction field will be described with reference to Fig. 11.

Like this, the management table 16 as shown in Fig. 3(a) is created (step 1308). Consequently, as described above, the administrator of the management device 10 may manage the Ethernet network 40 at one place.

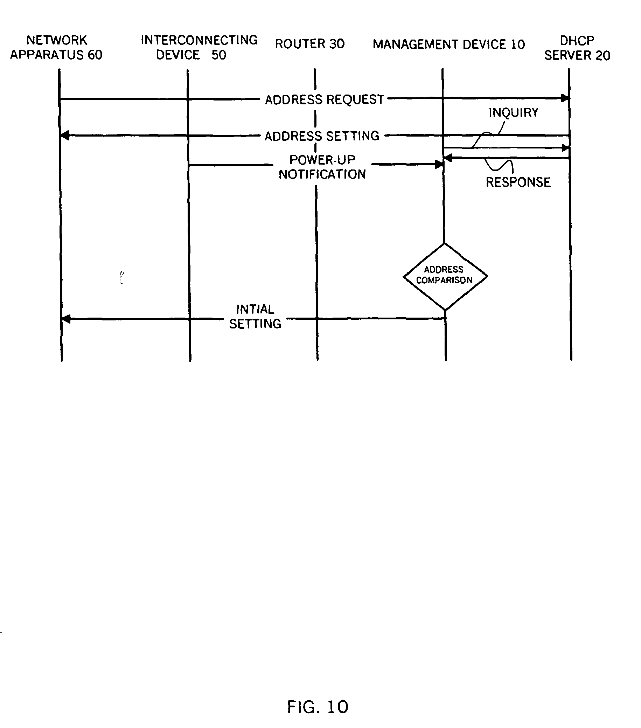

Next, a description will be given of a variation of the embodiment shown in Fig. 6 with reference to Fig. 10. In the present embodiment, the management device 10 communicates the DHCP server 20 periodically or in a predetermined condition, and receives an IP address and/or MAC address, and an initial setting request from the DHCP server 20. Since the DHCP server 20 recognizes that an initial setting on the network apparatus 60 may be performed by the management device 10 after communication parameters are set on the network apparatus 60, the DHCP server 20 instead of the network apparatus 60 requests the management device 10 to perform the initial setting on the network apparatus 60. Accordingly, in that event, the management device 10 compares the MAC address or IP address received from the DHCP server 20 with the MAC address or IP address obtained by the power-up notification from the interconnecting device 50.

The configuration information may be backed up in preparation for a future opportunity of replacement of the apparatus, or periodically. Alternatively, the configuration information may be backed up upon notification of change in the configuration information from the network apparatus 60. Optionally, a history of backup information may be managed in preparation for recovery necessitated by a configuration mistake or the like.

In Fig. 11 shown are several methods of updating the configuration file. Fig. 11 is a flowchart for representing a method for updating configuration information when a predetermined condition is satisfied, and Figs. 11(a) through (c) differ in the predetermined condition.

Referring to Fig. 11(a), the controller 11 determines whether an administrator has entered a backup instruction (step 1402), and if determining that the instruction has been entered, collects information from the specified apparatus according to a backup procedure (step 1404), and updates the configuration file (step 1406).

Referring to Fig. 11(b), the controller 11 determines whether a specified time has come (step 1408), and if determining that the time has come, collects information from the specified apparatus according to the backup procedure (step 1404), and updates the configuration file (step 1406). The specified time may be specified by the administrator in advance. When the method as shown in Fig. 11(b) is adopted, the controller 11 writes 'Periodical backup' into the "Instruction" field in the management table 16.

Referring to Fig. 11(c), the controller 11 determines whether a notification that the user of the network apparatus 60 has changed the apparatus configuration of the network apparatus 60 is received from the network apparatus 60 (step 1410), and if determining that the notification is received, collects information from the specified apparatus according to the backup procedure (step 1404), and updates the configuration file (step 1406). When the method as shown in Fig. 11(c) is adopted, the controller 11 writes 'Backup upon change' into the "Instruction" field in the management table 16.

When the backup process is complete, the controller 11 updates the "State" field in the management table 16 into 'Backed up'.

Using the information backed up as described above, an initial setting may be performed upon failure and replacement of the network apparatus 60, so that the network apparatus 60 may retain the setting before replacement unchanged.

The network apparatus 60 may be such that no second initial setting is required when the first initial setting has been appropriately performed. This may be realized because the network apparatus 60 stores the initial configuration information in the memory part 15. The management table 16 may be stored in the ROM 14 as a nonvolatile memory as described above. This may prevent unnecessary processes for address assignment and initial setting from being required.

In that event, the network apparatus 60 does not transmit an initial setting request to the router 30 in Fig. 6; the DHCP server does not transmit the initial setting request to the management device 10 in Fig. 10. In Fig. 6, the controller 61 of the network apparatus 60 determines before transmitting the initial setting request whether the initial setting has already been performed, and if determining that the initial setting has already been performed, then controls each section not to transmit the initial setting request, and if determining that the initial setting has not been performed yet, then controls each section to transmit the initial setting request. Such control may be exercised, for example, by setting the configuration file. In Fig. 10, a controller (not shown) of the DHCP server 20 may link the communication parameter request by the network apparatus 60 with the initial setting request.

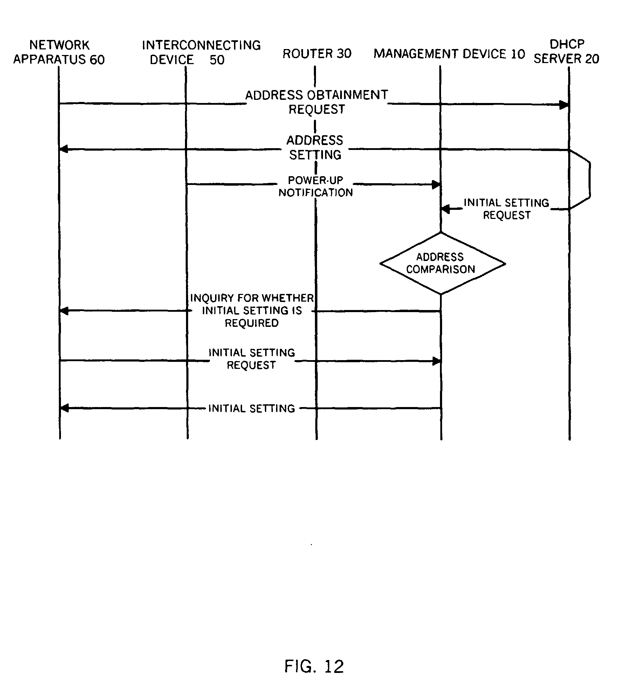

Referring now to Fig. 12, a description will be given of still another variation of the embodiment shown in Fig. 6. Fig. 12 is a flowchart for explaining still another variation of the embodiment shown in Fig. 6. The present embodiment differs from the embodiment in Fig. 6 in that the management device 10 addresses an inquiry to the network apparatus 60 after the DHCP server 20 has assigned an address and requested the initial setting to the management device 10. Although it is not determined whether the network apparatus 60 is expected to perform an initial setting in the embodiment shown in Fig. 10, an inquiry is addressed from the management device 10 to the network apparatus 60 in this embodiment to offset this fault. The network apparatus 60 responds to the initial setting request from the management device 10 when an initial setting is necessary, for example, upon initial installation or trouble, but does not respond when the initial setting is unnecessary. Whether the initial setting is necessary or not may be altered with a switch attached to the management device 10 or the network apparatus 60. Since other operations are the same as in Fig. 6, a detailed description will be omitted herein.

Next, referring to Fig. 13, a description will be given of a management operation of the network system 1. Fig. 13 is a timing chart for explaining the management operation of the network system 1. As shown in Fig. 13, the management device 10 of the present embodiment performs management through TELNET, management through SNMP, management through TFTP, that is, bulk data collection, and management through HTTP.

First, the management device 10 communicates with the network apparatus 60 using TELNET. TELNET is a protocol that enables communications between the management device 10 and the network apparatus 60 on a TCP/IP network. The management device 10, like a server such as on UNIX, connects with the network apparatus 60, and invites an administrator to enter a user ID and password in response to a login prompt from the network apparatus 60 to log in the system of the network apparatus 60. Next, the management device 10 allows the administrator to enter a management command and an information collection command in accordance with displayed messages, and the network apparatus 60 transmits the apparatus information in response.

In the present embodiment, the management device 10 performs management using SNMP (Simple Network Management Protocol), a standard protocol for the TCP/IP network management. In operation, SNMP uses the four types of messages: (1) get (for collecting management information); (2) get-next (for collecting management information); (3) set (for setting management information); and (4) trap (for notifying a failure). Specifically, normally under SNMP a GUI (Graphical User Interface) application is launched in the management device 10, and if information is required as a result of the operation, the information obtained by transmitting a GetRequest or GetNextRequest message, and received as a GetResponse message is displayed on screen. If configuration is required, a SetRequest message is issued and a setting result is received with a GetResponse message. If status conditions in the network apparatus 60 have changed, the network apparatus 60 independently transmits a trap signal to the management device 10, and the management device 10 displays a message therefor.

TFTP transmits and receives mainly configuration information and firmware of the network apparatus 60 in the form of a file. For example, the configuration information is collected as a file, and if the network apparatus 60 fails, the file is transmitted by return and used when the original configuration information should be restored.

Under HTTP (Hypertext Transfer Protocol), HTML documents are transmitted and received between the management device 10 and the network apparatus 60. The operation in HTTP is almost the same as in TELNET, but the human interface is based upon a Web page, rather than a command prompt, and thus a user may operate the management device 10 by selecting at his/her discretion a graphical element such as icon or window displayed on the screen using a pointing device.

If the network apparatus 60 is identified as an unauthorized device, the management device 10 as necessary refuses the login, and transmits an HTML document to notify the network apparatus 60 to that effect, and records the fact.

According to the network system 1 of the present embodiment, a predetermined initial setting may be set only by power-up of the network apparatus 60. Since the network apparatus 60 may be identified by the relay port 52 of the interconnecting device 50, the inventive system may be applied to a network environment with different types of apparatuses, and a different configuration procedure may be set to each type of the apparatus. The configuration information of the network apparatus 60 may be backed up, and thus replacement of the network apparatus 60 may be handled automatically. In this case, an administrator does not have to enter the MAC address or other identifier of the apparatus. Moreover, according to the network system 1 of the present embodiment, management information unique to the network apparatus 60 may be set.

## Claims

1. A management method for managing a target device (60) with a management device (10) using management information;
the management device being connected to a network (40);
the target device being connected to a port of a first interconnecting device (50) that is connected to the network; and
a second interconnecting device (30) being connected to the network between the management device and the first interconnecting device and being set as a default device in the network,
**characterized in that**
the method comprises the management device updating the management information (16, 17) by obtaining, from the first interconnecting device, an address on the network of the target device that has been powered on, identifying information of the first interconnecting device, and a port identifier that identifies the port, the target device sending an initial setting request and the address of the target device to the second interconnecting device, the second interconnecting device forwarding the initial setting request and the address to the management device, the management device determining whether the address of the target device that has sent the initial setting request is included in the management information that has been updated, and the management device initially setting the target device that has sent the initial setting request.

2. A method according to claim 1 wherein the management information (16) includes network apparatus information that includes device type information indicative of the address of the target device and a type of the target device, connection information that includes the identification information of the first interconnecting device, and the port identifier, and configuration information that manages information set in the target device.

## Patentansprüche

1. Managementverfahren zum Managen einer Zielvorrichtung (60) mit einer Managementvorrichtung (10) unter Verwendung von Managementinformationen,
wobei die Managementvorrichtung an ein Netzwerk (50) angeschlossen ist,
die Zielvorrichtung an einen Anschluss einer ersten Verbindungsvorrichtung (50) angeschlossen ist, die mit dem Netzwerk in Verbindung steht, und
eine zweite Verbindungsvorrichtung (30) an das Netzwerk zwischen der Managementvorrichtung und der ersten Verbindungsvorrichtung angeschlossen und als Standardvorrichtung im Netzwerk eingestellt ist,
**dadurch gekennzeichnet, dass**
das Verfahren das Aktualisieren der Managementinformationen (16, 17) durch die Managementvorrichtung durch Erhalten einer Netzwerkadresse der Zielvorrichtung, die eingeschaltet worden ist, von der ersten Verbindungsvorrichtung und das Identifizieren der Informationen der ersten Verbindungsvorrichtung sowie einer Anschlussidentifikationsvorrichtung, die den Anschluss identifiziert, umfasst, wobei die Zielvorrichtung eine Anforderung für eine anfängliche Einstellung und die Adresse der Zielvorrichtung an die zweite Verbindungsvorrichtung sendet, die zweite Verbindungsvorrichtung die Anforderung für eine anfängliche Einstellung und die Adresse der Managementvorrichtung zuführt, die Managementvorrichtung ermittelt, ob die Adresse der Zielvorrichtung, die die Anforderung für eine anfängliche Einstellung gesendet hat, in den Managementinformationen enthalten ist, die aktualisiert wurden, und die Managementvorrichtung eine Anfangseinstellung der Zielvorrichtung durchführt, die die Anforderung für eine anfängliche Einstellung gesendet hat.

2. Verfahren nach Anspruch 1, bei dem die Managementinformationen (16) Netzwerkvorrichtungsinformationen enthalten, die Informationen vom Vorrichtungstyp, welche die Adresse der Zielvorrichtung und einen Typ der Zielvorrichtung wiedergeben, sowie Anschlussinformationen, die die Identifizierungsinformationen der ersten Verbindungsvorrichtung und der Anschlussidentifikationsvorrichtung enthalten, und Konfigurationsinformationen, die Informationen managen, die in der Zielvorrichtung eingestellt wurden, umfassen.

## Revendications

1. Procédé de gestion pour gérer un dispositif cible (60) avec un dispositif de gestion (10) utilisant des informations de gestion ;
le dispositif de gestion étant connecté à un réseau (40) ;
le dispositif cible étant connecté à un port d'un premier dispositif d'interconnexion (50) qui est connecté au réseau ; et
un second dispositif d'interconnexion (30) étant connecté au réseau entre le dispositif de gestion et le premier dispositif d'interconnexion et étant défini comme un dispositif par défaut dans le réseau,
**caractérisé en ce que**
le procédé comprend le dispositif de gestion mettant à jour les informations de gestion (16, 17) par l'obtention, à partir du premier dispositif d'interconnexion, d'une adresse sur le réseau du dispositif cible qui a été mis sous tension, de l'identification d'informations du premier dispositif d'interconnexion, et d'un identifiant de port qui identifie le port, le dispositif cible envoyant une demande de définition initiale et l'adresse du dispositif cible au second dispositif d'interconnexion, le second dispositif d'interconnexion transférant la demande de définition initiale et l'adresse au dispositif de gestion, le dispositif de gestion déterminant si l'adresse du dispositif cible qui a envoyé la demande de définition initiale est comprise dans les informations de gestion qui ont été mises à jour, et le dispositif de gestion définissant initialement le dispositif cible qui a envoyé la demande de définition initiale.

2. Procédé selon la revendication 1 dans lequel les informations de gestion (16) comprennent les informations d'appareils de réseau qui comprennent des informations de types de dispositif révélatrices de l'adresse du dispositif cible et d'un type du dispositif cible, des informations de connexion qui comprennent les informations d'identification du premier dispositif d'interconnexion, et l'identifiant de port, et des informations de configuration qui gèrent des informations définies dans le dispositif cible.
